# EUROPÄISCHE PATENTANMELDUNG

(11) **EP 0 987 148 A1**
(43) Veröffentlichungstag der Anmeldung: **22.03.2000**
(21) Anmeldenummer: 98117463.4
(22) Anmeldetag: 15.09.1998
(51) Int. Cl.: B60R 19/52

(54) **Frontschutzbügel mit Energieabsorber**

(71) Anmelder: Rumpp, Gerhard, D-82266 Inning/Ammersee (DE)
(72) Erfinder: Rumpp, Gerhard, D-82266 Inning/Ammersee (DE)
(74) Vertreter: Grünecker, Kinkeldey, Stockmair & Schwanhäusser Anwaltssozietät

(57) **Zusammenfassung**

Zum Schutz der Leuchten sowie des Kühlergrills weisen Fahrzeuge einen Frontschutzbügel auf, der aus einem starren Rohrgestellt gebildet ist. Die Fahrzeuge mit angebautem Frontschutzbügel werden jedoch nicht nur im Gelände sondern auch auf öffentlichen Straßen eingesetzt. Das Verletzungsrisiko für Personen, die von einem Fahrzeug mit Frontschutzbügel erfaßt werden, ist jedoch sehr viel höher als bei Personenkraftwagen. Es besteht daher die Aufgabe, einen einfach aufgebauten Frontschutzbügel für Kraftfahrzeuge zu schaffen, der das Verletzungsrisiko für vom Fahrzeug erfaßte Personen vermindert. Erfindungsgemäß weist der Frontschutzbügel eine Verbindungsvorrichtung zum Verbinden des Frontschutzbügels mit einem Karosserieteil eines Kraftfahrzeuges auf, wobei die Verbindungsvorrichtung eine Dämpfungsvorrichtung zum Dämpfen der Bewegung des Frontschutzbügels gegenüber dem Karosserieteil bei einem Aufprall mit einer Person aufweist. Die Verbindungsvorrichtung weist außerdem eine Einrichtung auf, die die Bewegung des Frontschutzbügels aus der Ausgangsstellung heraus in mindestens zwei Richtungen ermöglicht, um den Frontschutzbügel beim Aufprall an die Kontur der Person anzupassen. Dadurch wird ein großflächiges Anlegen des Frontschutzbügels an die Person erreicht, die den Aufprall erleidet, wodurch das Verletzungsrisiko stark vermindert wird.

## Beschreibung

Die vorliegende Erfindung bezieht sich auf einen Frontschutzbügel mit einer Verbindungsvorrichtung zum Verbinden des Frontschutzbügels mit einem Karosserieteil eines Kraftfahrzeuges und einer Dämpfungsvorrichtung zum Dämpfen der Bewegung des Frontschutzbügels gegenüber dem Karosserieteil bei einem Aufprall mit einem Aufprallobjekt.

Wie allgemein bekannt ist, dienen Frontschutzbügel für Geländefahrzeuge als Schutz der Frontpartie des Fahrzeuges gegen Äste, Felsvorsprünge und gegen andere in den Fahrweg hineinragende Gegenstände beim Einsatz des Fahrzeuges im Gelände.

Durch den Frontschutzbügel sollen insbesondere bei rauhem Geländebetrieb die Leuchten im Frontbereich sowie der Kühlergrill mit den Lufteintrittsöffnungen zum Motorraum wirkungsvoll geschützt werden. Dazu ist der Frontschutzbügel aus einem starren Rohrgestell oder einem Kunststoffteil mit Versteifungseinrichtung gebildet, das an der Fahrzeugkarosserie befestigt ist.

Die Geländefahrzeuge mit angebautem Frontschutzbügel werden jedoch nicht nur im Gelände, sondern auch auf öffentlichen Straßen eingesetzt. Das Verletzungsrisiko für Personen, die vom Geländefahrzeug, insbesondere dessen Frontschutzbügel erfaßt werden, ist jedoch ungleich höher, als bei Personenkraftwagen.

Aus der JP-A 58-30874 ist ein Frontelement eines Fahrzeuges bekannt, das über eine Schwenkverbindung mit einem Karosserieelement verbunden ist. Am der Schwenkverbindung entgegengesetzten Ende des Frontelementes ist ein Stoßdämpfer angeordnet, so daß bei einem Aufprall mit einer Person das Frontelement um die Schwenkverbindung geschwenkt wird, wobei die Bewegung des Frontelementes durch den Stoßdämpfer gedämpft erfolgt. Die Bewegung des Frontelementes ist nur in einer Richtung, d.h. um die Rotationsachse der Schwenkverbindung, möglich.

Der Erfindung liegt die Aufgabe zugrunde, einen einfach aufgebauten Frontschutzbügel für Kraftfahrzeuge zu schaffen, der das Verletzungsrisiko für vom Fahrzeug erfaßte Personen vermindert.

Diese Aufgabe wird durch die im Patentanspruch 1 angegebenen Merkmale gelöst.

Erfindungsgemäß weist die Verbindungsvorrichtung eine Einrichtung auf, die die Bewegung des Frontschutzbügels aus der Ausgangsstellung heraus in mindestens zwei Richtungen ermöglicht, um den Frontschutzbügel beim Aufprall an die Kontur des Aufprallobjektes anzupassen.

Weiterbildungen der Erfindung sind in den Unteransprüchen angegeben.

Die Erfindung wird anhand der Zeichnungen näher erläutert. Darin zeigen:
Fig. 1 eine Seitenansicht eines mit einem Kraftfahrzeug verbundenen Frontschutzbügels gemäß einer ersten Ausführungsform der Erfindung,
Fig. 2 eine Seitenansicht eines mit einem Kraftfahrzeug verbundenen Frontschutzbügels gemäß einer zweiten Ausführungsform der Erfindung,
Fig. 3 eine Seitenansicht eines mit einem Kraftfahrzeug verbundenen Frontschutzbügels gemäß einer einer dritten Ausführungsform der Erfindung,
Fig. 4 eine Seitenansicht eines mit einem Kraftfahrzeug verbundenen Frontschutzbügels gemäß einer vierten Ausführungsform der Erfindung,
Fig. 5A bis 5D die Phasen eines Aufpralls einer Person auf einen Frontschutzbügel gemäß der ersten bis vierten Ausführungsform,
Fig. 6 eine Seitenansicht eines mit einem Kraftfahrzeug verbundenen Frontschutzbügels gemäß einer fünften Ausführungsform der Erfindung,
Fig. 7 einen Aufprall einer Person mit einem Frontschutzbügel gemäß der fünften Ausführungsform,
Fig. 8A eine Perspektivansicht eines Frontschutzbügels mit einem Schutzelement,
Fig. 8B eine Schnittdarstellung entlang der Linie A-A von Fig. 8A,
Fig. 9A eine Perspektivdarstellung eines Frontschutzbügels mit einer bevorzugten Rohrform, und
Fig. 9B eine Schnittdarstellung entlang der Linie B-B von Fig. 9A.

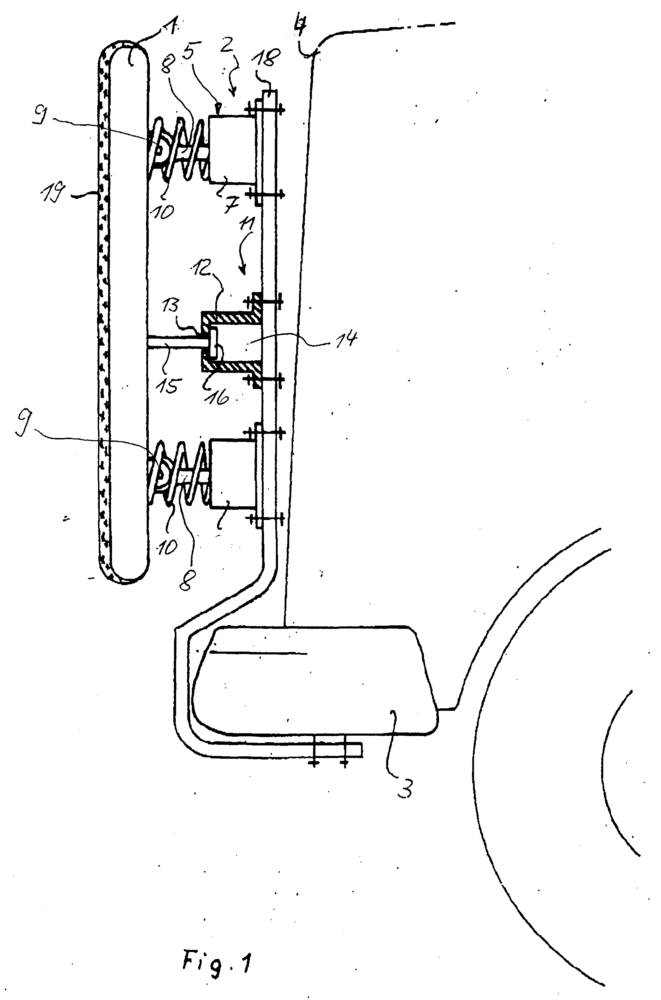

Wie in Fig. 1 gezeigt ist, ist ein Frontschutzbügel 1 über eine Verbindungsvorrichtung 2 mit einem Karosserieteil 3 im Frontbereich oder Heckbereich eines Kraftfahrzeuges 4 befestigt. Die Verbindungsvorrichtung 2 weist Dämpfungselemente 5 auf, die eine gedämpfte Bewegung des Frontschutzbügels 1 gegenüber dem Karosserieteil 3 bei einem Aufprall mit einem Aufprallobjekt ausführen.

Jedes Dämpfungselement 5 weist ein zylindrisches Gehäuse 7 auf, in dem ein Kolben (nicht gezeigt) mit einer Kolbenstange 8 gleitbeweglich gelagert ist. Der Kolben ist von einem flüssigen Medium umgeben und weist eine Durchtrittsöffnung zum Durchlassen des flüssigen Mediums auf (nicht gezeigt). Die Durchtrittsöffnung ist von einer Kugel, auf die eine Feder drückt, verschlossen. Die Rückführung des flüssigen Mediums erfolgt über einen Rückführungskanal. Solche Stoßdämpfer sind allgemein bekannt, so daß deren detaillierte Beschreibung unterbleibt.

Das Dämpfungselement 5 spricht erst ab einer vorbestimmten Belastungskraft an, z. B. ab ca. 2000 N. Bei dieser Belastungskraft wird durch die Kontraktion des Dämpfungselementes eine Aufprallenergie von 50 Joule abgebaut. Die Einstellung der Belastungskraft erfolgt durch die Auswahl der Feder, die die Kugel auf die Durchtrittsöffnung drückt.

Das Dämpfungselement 5 ist jedoch nicht auf die beschriebene Ausführungsform beschränkt. Zum Beispiel kann auch ein Dämpfungselement verwendet werden, das mit einem festen Medium, z.B. Sand, Granulat oder PUR-Schnitzeln arbeitet oder ein Dämpfungselement, das auf Reibungsbasis arbeitet, eingesetzt werden.

Die Kolbenstange 8 weist an ihrem dem Frontschutzbügel 1 nahegelegenen Ende eine Kopplung auf, die eine taumelnde Bewegung des Frontschutzbügels 1 gegenüber dem Karosserieteil 3 ermöglicht.

Die Kopplung 9 ist in dieser Ausführungsform als eine Gelenkverbindung 9 ausgebildet.

Die Gelenkverbindung 9 weist mindestens ein Zapfengelenk mit horizontal und/oder senkrecht verlaufenden Achsen auf.

In einer anderen Ausführungsform ist die Gelenkverbindung 9 als mindestens ein Kugelgelenk ausgebildet.

Als eine Vorbelastungseinrichtung ist eine Druckfeder 10 vorgesehen, die sich an einem Ende am Frontschutzbügel 1 oder an der Kolbenstange 8 und mit dem anderen Ende am Dämpfungselement 5 abstützt und sich über die Kolbenstange 8 erstreckt. Die Druckfeder 10 ist so ausgelegt, daß sie in der Ausgangsstellung des Frontschutzbügels 1 eine Federkraft von mindestens 200 N aufweist. Dadurch wird gewährleistet, daß der Frontschutzbügel 1 nach einem Aufprall sich selbständig in seine Ausgangslage bei gleichzeitiger Rückführung der Dämpfungselemente 5 in ihre Ausgangsposition zurückbewegt. Zum Schutz vor Witterungseinflüssen ist die mit dem Dämpfungselement 5 parallel geschaltete Druckfeder 10 in einer bevorzugten Ausgestaltung von einer Dichtungsmanschette (nicht gezeigt) umschlossen.

Die Druckfeder 10, die den Frontschutzbügel 1 bzw. die Kolbenstange 8 des Dämpfungselementes 5 vorbelastet, ist so dimensioniert, daß die Federkraft der Druckfeder 10 über den Dämpfungsweg des mit der Kolbenstange 8 verbundenen Kolbens im wesentlichen konstant bleibt.

Um den Weg des Frontschutzbügels 1 auf seine Ausgangsstellung zu begrenzen, d.h., zu verhindern, daß sich der Frontschutzbügel 1 durch die Kraft der Druckfedern 10 über die Ausgangsstellung hinausbewegt, ist eine Anschlagvorrichtung 11 vorgesehen, die einen eine Öffnung 13 aufweisenden Behälter 12 besitzt, wobei die Öffnung 13 in einen Hohlraum 14 mündet. Ein Ende eines Bolzens 15 ist mit dem Frontschutzbügel 1 fest verbunden, und ein anderes Ende des Bolzens 15 weist einen Bolzenkopf 16 auf, der von dem Hohlraum 14 des Behälters 12 aufgenommen wird. Der Bolzenkopf 16 ist größer bemessen als die Öffnung 13. Der Hohlraum 14, die Öffnung 13, der Bolzen 15 und der Bolzenkopf 16 sind so dimensioniert, daß die Bewegung des Frontschutzbügels 1 in die mindestens zwei Richtungen nicht behindert wird.

Es ist anzumerken, daß die dargestellten Dämpfungselemente 5 und die Anschlagvorrichtung 11 im Frontbereich eines Fahrzeuges beidseitig vorgesehen sind und im Bereich zwischen den Frontscheinwerfern angeordnet sind.

Die zylindrischen Gehäuse 7 der Dämpfungselemente 6 und die Behälter 12 der Anschlagvorrichtungen 11 sind mit einer Halterung 18 verbunden, die wiederum mit dem Karosserieteil 3 des Kraftfahrzeuges 4 verbunden sind.

Bei der ersten Ausführungsform sind zwei Dämpfungselemente 5 in einem oberen Bereich des Frontschutzbügels 1 angeordnet, zwei Anschlagvorrichtungen 11 sind in einem mittleren Bereich des Frontschutzbügels 1 angeordnet, und zwei Dämpfungselemente 5 sind in einem unteren Bereich des Frontschutzbügels 1 angeordnet.

Um die Verletzungsgefahr von Personen weiter zu vermindern, kann in einem vorderen Bereich, d.h. in den Bereich, in dem eine Person mit dem Frontschutzbügel 1 kollidieren kann, der Frontschutzbügel 1 mit einer Polsterung 19 versehen werden.

Die Dämpfungselemente 5 für den oberen Bereich des Frontschutzbügels können eine andere Dämpfungskonstante aufweisen, als die Dämpfungselemente 5 im unteren Bereich des Frontschutzbügels 1.

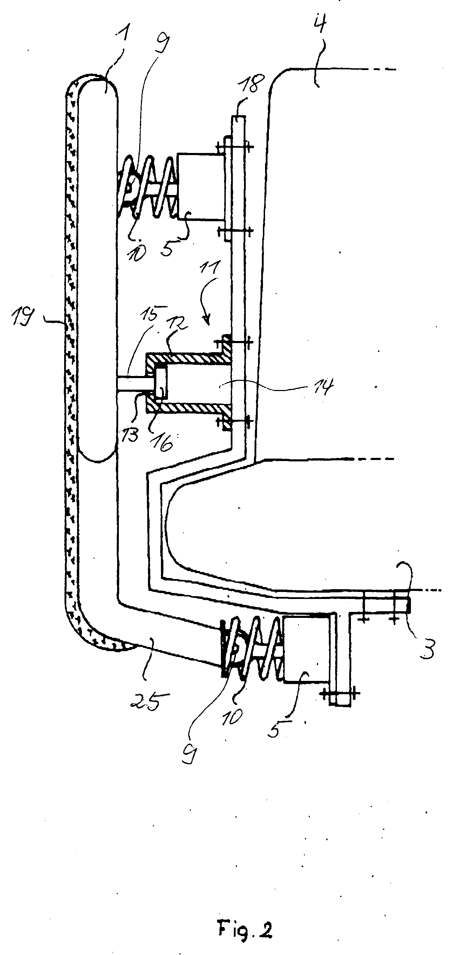

Die Ausführungsform von Fig. 2 unterscheidet sich von der Ausführungsform gemäß Fig. 1 darin, daß der Frontschutzbügel 1 einen Befestigungsarm 25 aufweist, der in den Unterflurbereich des Fahrzeuges 4 hineinragt. Die Halterung 18 weist im Unterflurbereich des Fahrzeuges eine Befestigungsplatte 26 auf. Zwischen der Befestigungsplatte 26 und dem Befestigungsarm 25 sind die paarweise angeordneten Dämpfungselemente 5 mit Kolbenstange 8, Druckfeder 10 und Gelenkverbindung 9 angeordnet.

Wie in der Ausführungsform von Fig. 1, sind in einem oberen Bereich zwei Dämpfungselemente 5 mit Druckfedern 10 und Gelenkverbindungen 9 vorgesehen. In einem mittleren Bereich des Frontschutzbügels 1 sind zwei Anschlagvorrichtungen 11 vorgesehen. Im Unterflurbereich des Kraftfahrzeuges 4 sind zwei Dämpfungselemente 5 mit Federn 10 und Gelenkverbindungen 9 angeordnet.

Die Polsterung 19 erstreckt sich bevorzugterweise zu einem Teil des Befestigungsarms 25, der sich zu dem Dämpfungselement 5 hin erstreckt.

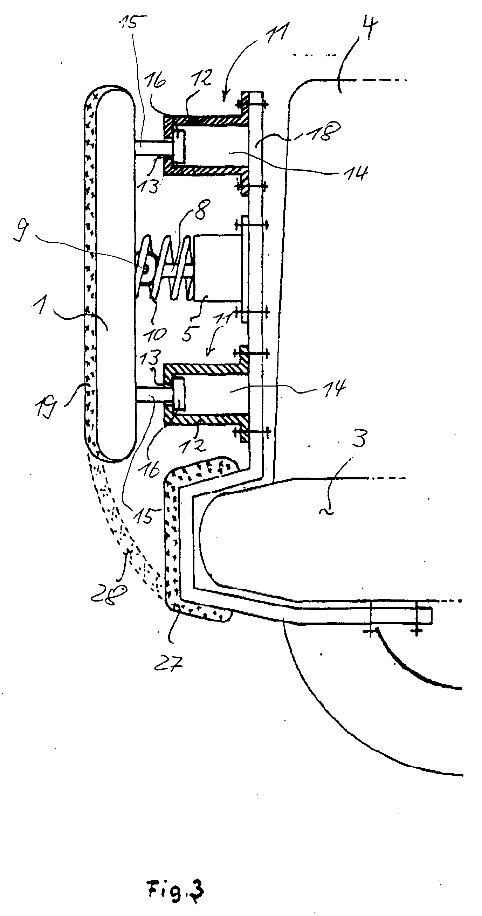

In der in Fig. 3 dargestellten dritten Ausführungsform der Erfindung sind in einem oberen und unteren Bereich des Frontschutzbügels 1 jeweils zwei Anschlagvorrichtungen 11 mit dem Frontschutzbügel 1 verbunden, und in einen mittleren Bereich des Frontschutzbügels 1 sind zwei Dämpfungselemente 5 vorhanden, die über Gelenkverbindungen 9 mit dem Frontschutzbügel 1 verbunden sind und mittels Druckfedern 10 den Frontschutzbügel 1 in die Ausgangslage vorbelasten.

Der Teil der Halterung 18, der sich unterhalb des Frontschutzbügels 1 befindet, ist vorzugsweise mit einer Polsterung 27 aus einem elastischen Material überzogen. Alternativ dazu kann ein Polsterelement 28 (gestrichelt dargestellt) zwischen der Unterkante des Frontschutzbügels 1 und der Unterkante der Halterung 18 vorgesehen werden.

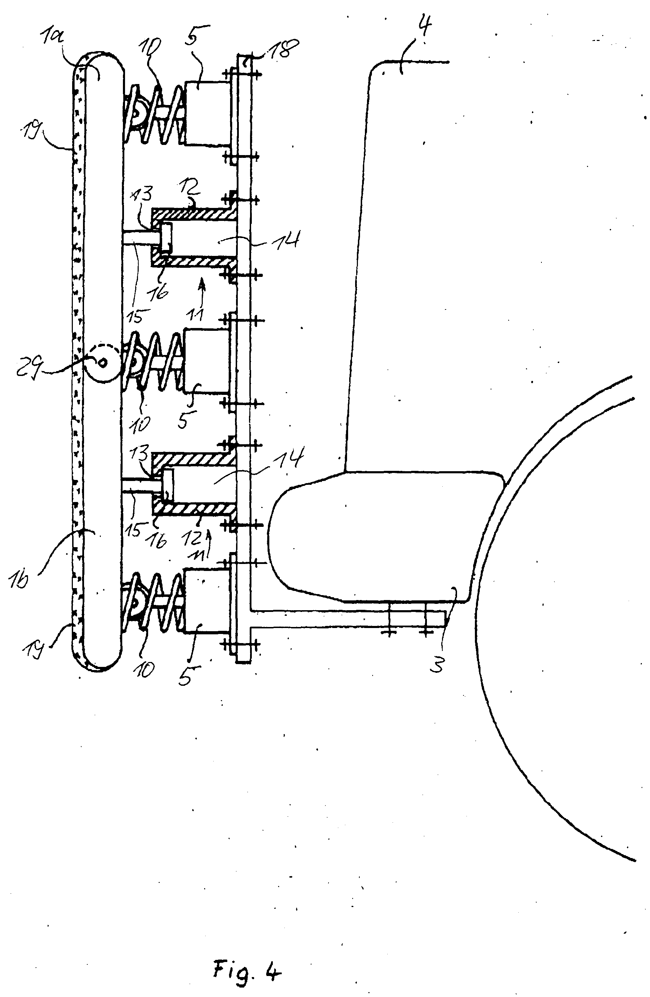

Der Frontschutzbügel 1 gemäß der in Fig. 4 gezeigten vierten Ausführungsform der Erfindung ist zweigeteilt und weist einen oberen Teil 1a und einen unteren Teil 1b auf die über ein Gelenk 29, z.B. ein Zapfengelenk oder ein Kugelgelenk miteinander verbunden sind. Der Frontschutzbügel 1 ist an der Halterung 18 beidseitig über Dämpfungselemente 5, Druckfedern 10 und Gelenkverbindungen 9 jeweils im oberen Bereich, im mittleren Bereichs und im unteren Bereichs des Frontschutzbügels 1 verbunden. Zwischen den oberen und mittleren Dämpfungselementen 5 und zwischen den mittleren und unteren Dämpfungselementen 5 sind jeweils Anschlagsvorrichtungen 11 vorgesehen.

In Abwandlung der vierten Ausführungsform kann der Frontschutzbügel 1 auch in einem linken und rechten Teil unterteilt sein und mit einem Gelenk miteinander verbunden sein. Diese Ausführungsform hat den besonderen Vorteil, daß bei einem Aufprall mit zwei Personen sich der jeweilige Teil des Frontschutzbügels beim Aufprall an die jeweilige Person anlegt, so daß für beide Personen ein optimales Dämpfungsverhalten erzielt wird. Außerdem ist die Unterteilung des Frontschutzbügels 1 in mehr als zwei Teile möglich, die jeweils über Gelenke 29 miteinander verbunden sind.

Die in Fig. 4 gezeigte Anordnung kann an mindestens zwei oder mehreren Stellen übereinander an der Fahrzeugvorderfront angeordnet sein.

Auch kann bei der Ausführungsform nach Fig. 4 können die Dämpfungselemente 5 eine unterschiedliche Dämpfungskonstante zueinander aufweisen.

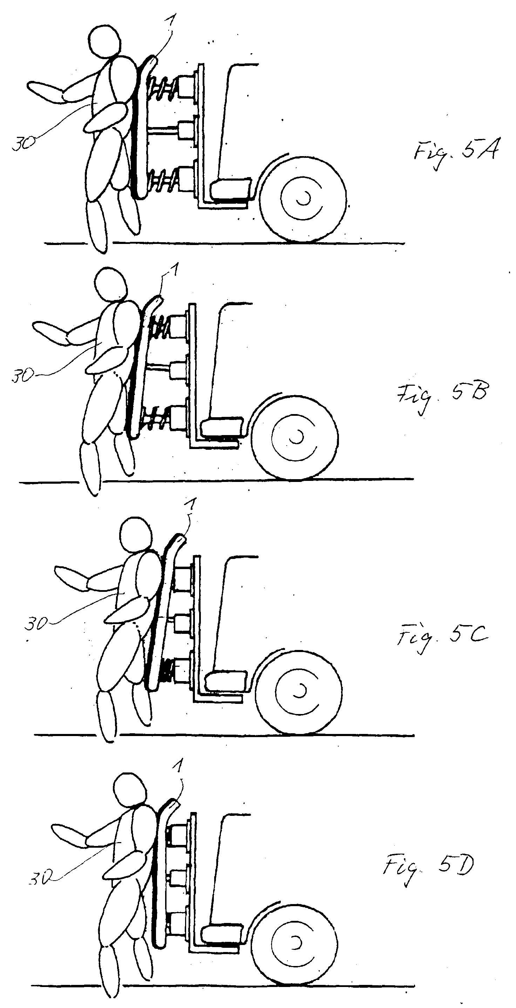

Figur 5 zeigt die Phasen des Aufpralls. Figur 5A zeigt den funktionsbereiten Frontschutzbügel 1, auf den eine Person 30 aufprallt und gerade die erste Berührung mit dem Frontschutzbügel 1 aufnimmt.

In Fig. 5B ist dargestellt, daß sich bei fortschreitendem Aufprall die Stellung des Frontschutzbügels 1 in einer gedämpften Bewegung ändert und daß der Frontschutzbügel 1 sich dabei mit einer großen Berührungsfläche an den Körper der Person 30 anschmiegt, um dadurch den Grad der Verletzung zu minimieren. Durch die große Berührungsfläche am Körper der Person wird die spezifische Flächenbelastung am menschlichen Körper vermindert.

In Fig. 5C ist dargestellt, daß bei weiter fortschreitendem Aufprall eine große Berührungsfläche zwischen dem Körper der Person 30 und dem Frontschutzbügel 1 erhalten bleibt, und daß die Dämpfungselemente 5 des Frontschutzbügels 1 den Aufprall weiter mindern.

Aus Fig. 5D ist zu erkennen, daß in der Endphase des Aufpralls die noch wirksam gebliebene Dämpfungskapazität die Restwucht des Aufpralls absorbiert, wobei alle Dämpfungselemente 5 zusammengedrückt sind und ihr Dämpfungspotential zum Verbrauchen der Aufprallenergie verwendet wurde.

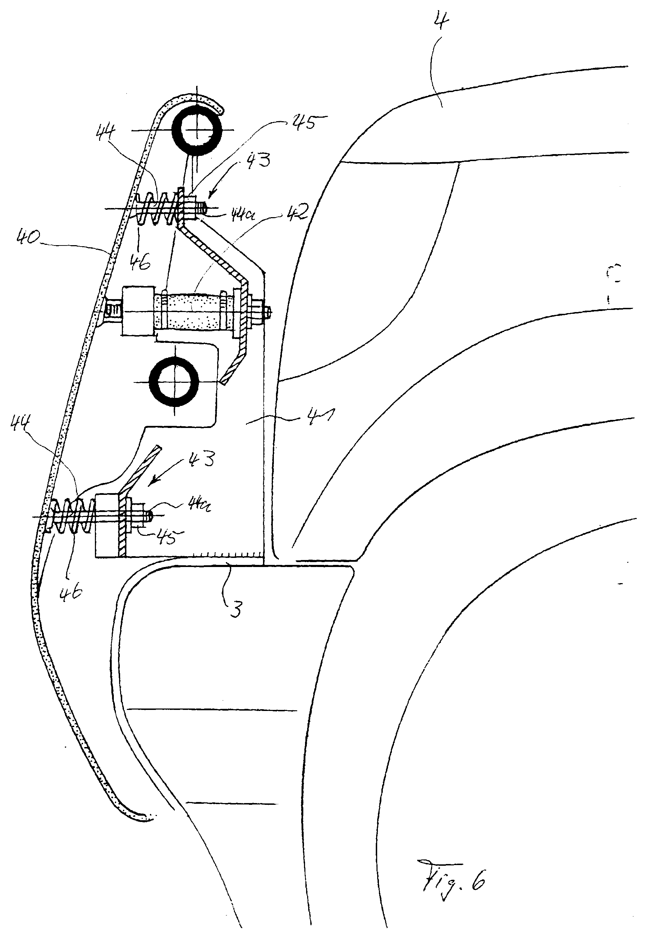

Fig. 6 zeigt eine Seitenansicht eines Frontschutzbügels 40 gemäß einer fünften Ausführungsform der Erfindung. Der Frontschutzbügel 40 ist über eine Halterung 41, die an einem Karosserieteil 3 eines Kraftfahrzeuges 4 befestigt ist, gehalten. Ein Federdämpfsystem 42 ist zwischen dem Frontschutzbügel 40 und der Halterung 41 in einem vertikal mittleren oder äußeren Bereich angeordnet. Das Feder-Dämpfsystem 42 stellt gleichzeitig den Drehpunkt für den beweglichen Frontschutzbügel 40 her. Anschläge 43 stellen eine Begrenzung des Bewegungsbereiches des Frontschutzbügels 40 dar und sind in einem oberen und unteren Bereich des Frontschutzbügels 40 angeordnet und mit der Halterung 41 verbunden jeder Anschlag 43 weist einen Bolzen 44 mit einem Gewindebereich 44a auf auf den eine Mutter 45 aufgeschraubt ist, wobei der Bolzen 44 durch ein Loch der Halterung 41 hindurchtritt und die Mutter 45 auf den Gewindebereich 44a aufgeschraubt ist und dadurch die Bewegungsbegrenzung zu definieren. Der Anschlag 43 wird mittels einer Druckfeder 46 in Richtung der Ausgangsstellung des Frontschutzbügels 40 vorbelastet. Die Bolzen 44 und die Löcher der Halterung 41 sind so dimensioniert, daß die Bewegung des Frontschutzbügels 40 in die mindestens zwei Richtungen nicht behindert wird.

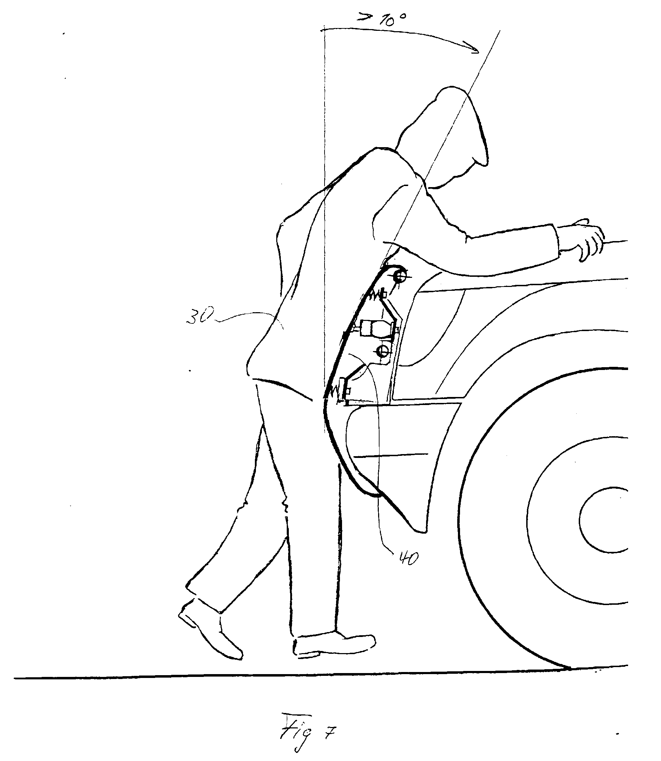

Wie in Fig. 7 genauer dargestellt ist, weist der Frontschutzbügel 40 eine Schräge zur Vertikalen auf wobei die Neigung der Schräge vorteilhafterweise 10° oder mehr beträgt.

Dies hat den Vorteil, daß bei einem Aufprall die Person 30 nach oben über die Motorhaube geschleudert wird, wodurch die Überlebenschancen deutlich verbessert werden. Dies ist besonders vorteilhaft, wenn die Person 30, die mit dem Frontschutzbügel 40 kollidiert, ein Kind ist. Ansonsten entsprechen die Phasen des Aufpralls den Fig. 5A bis 5D.

Auch dieser Frontschutzbügel kann mit einem elastischen Polsterelement teilweise oder vollständig verkleidet sein, wie es z.B. im DE-Gebrauchsmuster 296 15 567.5 angegeben ist.

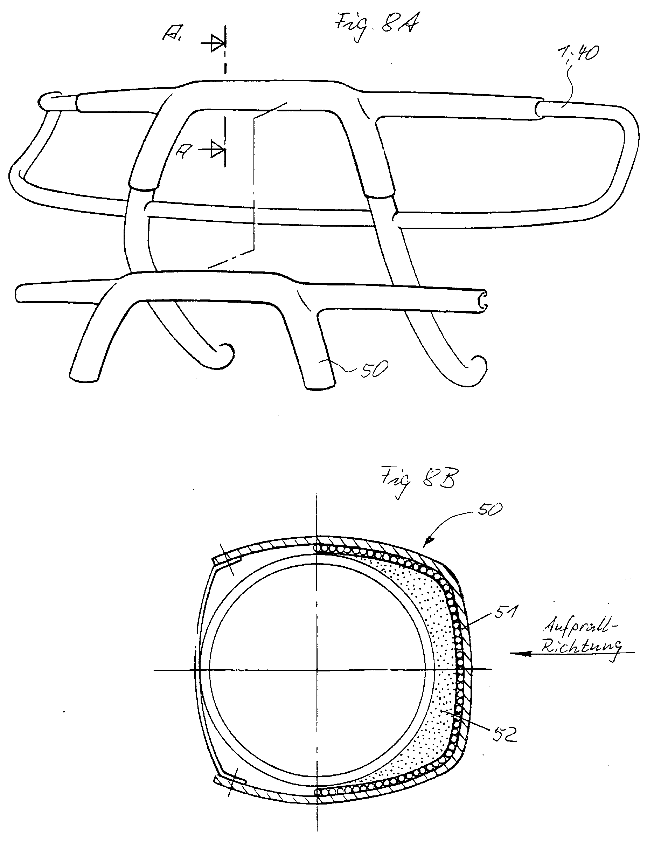

In Fig. 8A ist gezeigt, wie ein Schutzelement 50 am Frontschutzbügel 1, 40 befestigt wird. Das Schutzelement 50 weist eine zähelastische Kunststoffblende 51, die ein elastisches Dämpfungsmaterial 52 umschließt, auf.

Durch dieses Schutzelement 50 wird erreicht, daß der Körper der Person 30, der mit dem Frontschutzbügel 1, 40 kollidiert, zunächst eine gedämpft eingeleitete Flächenbelastung erfährt, bevor die Dämpfungselemente 5, 42 die Aufprallenergie absorbieren, wodurch der Grad der Verletzung für die Person 30 nachhaltig verringert wird.

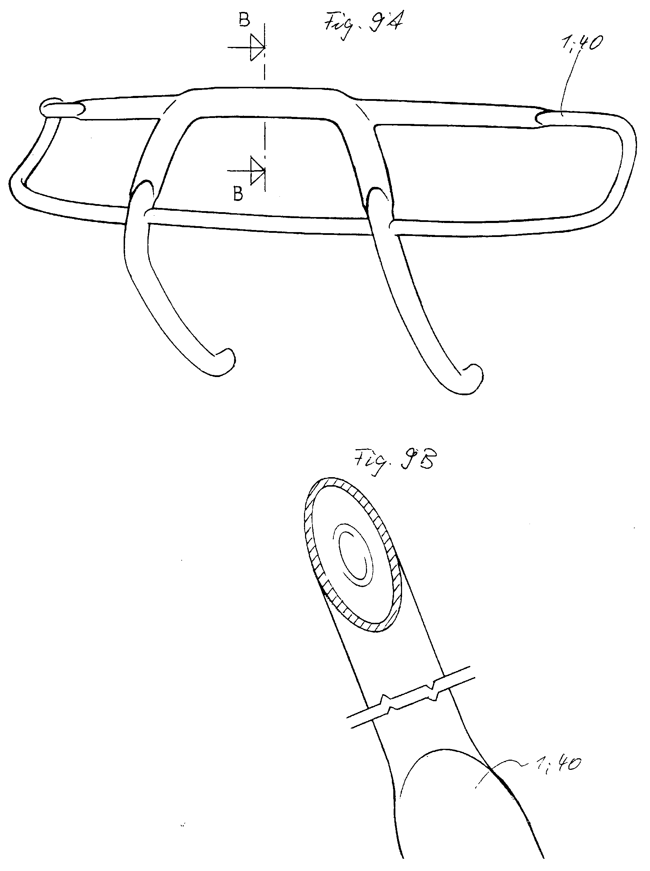

Wie aus den Fig. 9A und 9B zu sehen ist, ist der Frontschutzbügel 1, 40 bevorzugterweise aus ovalen Rohren hergestellt, wobei der Bereich der größten Abmessung der Rohre in Vertikalrichtung des Frontschutzbügels 1, 40 ausgerichtet ist. Auch durch diese Maßnahme wird eine großflächige Aufprallfläche erzielt, so daß der Körper der Person 30 möglichst großflächig vom Frontschutzbügel 1, 40 beim Aufprall berührt wird.

Im Ortsverkehr ereignen sich statistisch die weit überwiegende Anzahl von Personenunfällen bei einer Fahrzeuggeschwindigkeit, die unterhalb von 25,5 km/h liegt, weil die Geschwindigkeit des Fahrzeuges vor dem Aufprall noch erheblich abgebremst wird. Insofern tragen die in der vorangegangenen Beispielsbeschreibung dargestellten Ausführungsformen auf geeignete Weise dazu bei, das Verletzungsrisiko für Personen, die mit einem Frontschutzbügel 1, 40 eines Fahrzeuges kollidieren, stark zu vermindern. Die dargestellten Ausführungsformen des Frontschutzbügels 1, 40 lassen sich bei allen Fahrzeugen, insbesondere bei Pkw, Off-Road-Fahrzeugen, LKW, Bussen, Baustellenfahrzeugen und Spezialfahrzeugen sowohl im Front- als auch im Heckbereich anwenden.

Die Anordnungen nach Fig. 1 bis 7 können wahlweise mit unterschiedlicher Dämpfungskennlinie für LKW's bzw. Omnibusse übereinander angeordnet werden. Diese Ausführungen haben den Vorteil, daß abhängig von der möglichen Aufschlaghöhe, vom Boden aus gemessen, beim Unfallgeschehen mit ungeschützten Personen unterschiedliche Dämpfungskonstanten eingestellt werden können.

Durch die dargestellten Ausführungsformen der Erfindung wird sowohl der Grad der Verletzungen bei einem Aufprall von Kindern oder Erwachsenen im Ortsverkehr verringert. Darüber hinaus werden aber auch Aufprallschäden an zusammenstoßenden Fahrzeugen oder Aufprallschäden mit anderen Aufprallobjekten gemindert.

Wie bereits dargestellt, federt der Frontschutzbügel 1, 40 nicht zurück bzw. springt nicht zurück, sondern führt eine gedämpfte Bewegung in die Ausgangsstellung zurück aus. Dadurch wird ermöglicht, daß bei Aufprallgegebenheiten, wie z.B. beim Einparken oder beim Einfahren in Garagen, die Eigenschaften des Frontschutzbügels zur Minderung des Verletzungsgrades bzw. des Schadens erhalten bleiben. Die automatische Rückführung des Frontschutzbügels 1, 40 in seine Ausgangsstellung ist auch deshalb von Vorteil, weil sonst der Kfz-Service bei jedem Auffahrunfall bzw. Aufprall beim Einparken eingeschaltet werden müßte bzw. Probleme der Produkthaftung sich auftun würden.

In einer nicht dargestellten Ausführungsform wird die taumelfähige Kopplung durch mindestens eine Druckfeder realisiert, die die Bewegung des Frontschutzbügels 1, 40 in die mindestens zwei Richtungen ermöglicht.

Ferner sind Kombinationen der dargestellten Ausführungsformen möglich.

## Patentansprüche

1. Frontschutzbügel mit einer Verbindungsvorrichtung (2) zum Verbinden des Frontschutzbügels (1; 40) mit einem Karosserieteil (3) eines Kraftfahrzeuges (4), wobei die Verbindungsvorrichtung (2) eine Dämpfungsvorrichtung (5, 42) aufweist zum Dämpfen der Bewegung des Frontschutzbügels (1, 40) gegenüber dem Karosserieteil (3) bei einem Aufprall mit einem Aufprallobjekt (30), und wobei die Verbindungsvorrichtung eine Einrichtung (9, 42) aufweist, die die Bewegung des Frontschutzbügels (1) aus der Ausgangsstellung heraus in mindestens zwei Richtungen ermöglicht, um den Frontschutzbügel (1) beim Aufprall an die Kontur des Aufprallobjektes (30) anzupassen.

2. Frontschutzbügel nach Anspruch 1, **dadurch gekennzeichnet,** daß der Frontschutzbügel (1; 40) in seiner Ausgangsstellung im wesentlichen senkrecht zu einer Bewegungsrichtung des Kraftfahrzeuges (4) angeordnet ist.

3. Frontschutzbügel nach Anspruch 1 oder 2, **dadurch gekennzeichnet,** daß die Einrichtung (9, 42), die die Bewegung des Frontschutzbügels (1, 40) aus der Ausgangsstellung in mindestens zwei Richtungen ermöglicht, eine taumelfähige Kopplung ist.

4. Frontschutzbügel nach Anspruch 3, **dadurch gekennzeichnet,** daß die taumelfähige Kopplung eine Gelenkverbindung (9) ist.

5. Frontschutzbügel nach Anspruch 4, **dadurch gekennzeichnet,** daß die Gelenkverbindung (9) mindestens ein Zapfengelenk aufweist mit horizontal und/oder senkrecht verlaufenden Achsen.

6. Frontschutzbügel nach Anspruch 4, **dadurch gekennzeichnet,** daß die Gelenkverbindung (9) mindestens ein Kugelgelenk aufweist.

7. Frontschutzbügel nach einem der Ansprüche 1 bis 6, **dadurch gekennzeichnet,** daß die Dämpfungsvorrichtung mindestens ein Dämpfungselement (5) aufweist, welches ein zylindrisches Gehäuse (7) aufweist, in dem ein Kolben mit einer Kolbenstange (8) gleitbeweglich gelagert ist, wobei der Kolben von einem flüssigen Medium umgeben ist, und wobei der Kolben eine Durchtrittsöffnung zum Durchlassen des flüssigen Mediums aufweist und wobei die Durchtrittsöffnung von einer Kugel, auf die eine Feder drückt, verschlossen ist.

8. Frontschutzbügel nach Anspruch 7, **dadurch gekennzeichnet,** daß die Gelenkverbindung (9) zwischen der Kolbenstange (8) und dem Frontschutzbügel (1) angeordnet ist.

9. Frontschutzbügel nach einem der Ansprüche 1 bis 8, **dadurch gekennzeichnet,** daß die Verbindungsvorrichtung (2) eine Vorbelastungseinrichtung (10, 46) aufweist, die den Frontschutzbügel (1, 40) in seiner Ausgangslage vorbelastet.

10. Frontschutzbügel nach Anspruch 9, **dadurch gekennzeichnet,** daß die Vorbelastungseinrichtung (10, 46) mindestens eine Druckfeder aufweist.

11. Frontschutzbügel nach Anspruch 9 oder 10, **dadurch gekennzeichnet,** daß die Vorbelastungseinrichtung (10, 46) so dimensioniert ist, daß diese den Frontschutzbügel (1, 40) nach dem Aufprall in seine Ausgangslage zurückführt.

12. Frontschutzbügel nach einem der Ansprüche 9 bis 11, **dadurch gekennzeichnet,** daß die Vorbelastungseinrichtung (10, 46) pro Dämpfungselement (5, 42) mindestens 200 N aufbringt.

13. Frontschutzbügel nach einem der Ansprüche 1 bis 12, **dadurch gekennzeichnet,** daß die Verbindungsvorrichtung (2) eine Anschlagvorrichtung (11, 43) aufweist, die eine Rückbewegung des Frontschutzbügels (1, 40) auf seine Ausgangsstellung begrenzt.

14. Frontschutzbügel nach Anspruch 13, **dadurch gekennzeichnet,** daß die Anschlagvorrichtung einen Behälter (12) mit einem Hohlraum (14) und einer Öffnung (12) aufweist, in der ein Bolzen (15) beweglich angeordnet ist, der einen Bolzenkopf (16) aufweist, der größer als die Öffnung (13) ist, wobei der Bolzen (15) mit dem Frontschutzbügel (1) verbunden ist, und der Hohlraum (14), die Öffnung (13), der Bolzen (15) und der Bolzenkopf (16) so dimensioniert sind, daß die Bewegung des Frontschutzbügels (1) in die mindestens zwei Richtungen nicht behindert wird.

15. Frontschutzbügel nach einem der Ansprüche 1 bis 14, **gekennzeichnet durch** ein Feder-Dämpfsystem (42), bei dem das Dämpfungselement, die Vorbelastungseinrichtung und die Gelenkverbindung mit dem Frontschutzbügel in einer Baugruppe integriert sind.

16. Frontschutzbügel nach einem der Ansprüche 1 bis 15, **dadurch gekennzeichnet,** daß eine Vorderfläche des Frontschutzbügels (40) eine nach oben verlaufende Schräge von mindestens 10° zur Senkrechten des Frontschutzbügels in Richtung des Fahrzeugs aufweist.

17. Frontschutzbügel nach einem der Ansprüche 1 bis 16, **dadurch gekennzeichnet,** daß ein vorderer Bereich des Frontschutzbügels (1, 40) mit einer Polsterung (19) aus einem elastischen Material versehen ist.

18. Frontschutzbügel nach einem der Ansprüche 1 bis 16, **dadurch gekennzeichnet,** daß der Frontschutzbügel (40) in seinem vorderen Bereich ein Schutzelement (50) aufweist, das eine Kunststoffblende (51) und ein zwischen Kunststoffblende (51) und dem Frontschutzbügel (1, 40) angeordnetes elastisches Dämpfungsmaterial (52) umfaßt.

19. Frontschutzbügel nach einem der Ansprüche 1 bis 18, **dadurch gekennzeichnet,** daß das Rohr des Frontschutzbügels (1, 40) eine ovale Querschnittsform besitzt, wobei sich das Rohr in der größeren Abmessung in vertikaler Richtung erstreckt.

20. Frontschutzbügel nach einem der Ansprüche 1 bis 19, **dadurch gekennzeichnet,** daß die Dämpfungselemente (5, 42), die Anschlagvorrichtungen (11, 43) von einer Halterung (18, 41) getragen sind, wobei die Halterung (18, 41) mit dem Karosserieteil (3) verbunden ist.

21. Frontschutzbügel nach einem der Ansprüche 1 bis 20, **dadurch gekennzeichnet,** daß der Frontschutzbügel (1, 40) in mindestens zwei Teile (1a, 1b) unterteilt ist, die über ein Gelenk (29) bzw. Gelenke (29) miteinander verbunden sind.

22. Frontschutzbügel nach einem der Ansprüche 1 bis 22, **dadurch gekennzeichnet,** daß die Dämpfungselemente (5, 42) eines Frontschutzbügels (1) unterschiedliche Dämpfungskonstanten aufweisen.

23. Frontschutzbügel nach einem der Ansprüche 10 bis 22, **dadurch gekennzeichnet,** daß die Druckfeder 10, die die Kolbenstange 8 des Dämpfungselementes 5 vorbelastet, so dimensioniert ist, daß die Federkraft der Druckfeder 10 über den Dämpfungsweg des mit der Kolbenstange 8 verbundenen Kolbens im wesentlichen konstant bleibt.
